# EUROPÄISCHE PATENTSCHRIFT

(11) **EP 3 679 622 B1**
(45) Veröffentlichungstag und Bekanntmachung des Hinweises auf die Patenterteilung: **29.06.2022**
(21) Anmeldenummer: 18778376.6
(22) Anmeldetag: 07.09.2018
(51) Int. Cl.: H01M 10/04

(54) **VERFAHREN UND VORRICHTUNG ZUR HERSTELLUNG MEHRERER ELEKTRODENSTAPEL**
METHOD AND APPARATUS FOR PRODUCING A PLURALITY OF ELECTRODE STACKS
PROCÉDÉ ET DISPOSITIF POUR LA FABRICATION DES EMPILEMENTS D'ÉLECTRODES

(30) Priorität: 08.09.2017 DE 102017215905
(43) Veröffentlichungstag der Anmeldung: 15.07.2020
(73) Patentinhaber: Optima Life Science GmbH, 74523 Schwäbisch Hall (DE)
(72) Erfinder: FEYERHERD, Jürgen, 74545 Michelfeld (DE); JANSEN, Johannes, 74545 Michelfeld (DE); WIELAND, Werner, 74586 Frankenhardt (DE)
(74) Vertreter: Patentanwälte Ruff, Wilhelm, Beier, Dauster & Partner mbB
(86) Internationale Anmeldenummer: PCT/EP2018/074088
(87) Internationale Veröffentlichungsnummer: WO 2019/048589

(56) Entgegenhaltungen:
- EP-A1- 2 696 421
- EP-A1- 2 889 948

## Beschreibung

Die vorliegende Erfindung betrifft ein Verfahren und eine Vorrichtung zur Herstellung mehrerer Elektrodenstapel, beispielsweise für ein Batteriemodul.

Als Elektrodenstapel wird im Zusammenhang mit der Erfindung eine Baugruppe umfassend mindestens zwei eine Zelle bildende Elektroden bezeichnet. Üblicherweise ist weiter ein zwischen den Elektroden angeordneter Separator vorgesehen. Bei der Zelle handelt es sich vorzugsweise um Sekundärzellen, es sind jedoch auch Elektrodenstapel mit Primärzellen oder Brennstoffzellen denkbar. Ein Zusammenschluss mehrerer Zellen wird üblicherweise als Batterie bezeichnet. Im Zusammenhang mit der Erfindung umfasst der Begriff Elektrodenstapel sowohl Gestaltungen mit einer Zelle als auch Gestaltungen mit mehreren Zellen oder Zellpaketen. Als Batteriemodul werden sowohl Gestaltungen mit nur einer Zelle als auch Gestaltungen mit zu einer oder mehreren Batterie(n) geschalteten Zellen oder Zellpaketen bezeichnet. Umfasst das Batteriemodul mehrere Batterien und/oder Zellen, so können diese in Reihe oder parallel zueinander geschaltet sein, abhängig von einem Anforderungsprofil an das Batteriemodul.

Das Verfahren und die Vorrichtung betreffen insbesondere die Herstellung von Elektrodenstapeln für Lithium-Ionen-Batteriemodule, beispielsweise Lithium-Ionen-Batterien für Kraftfahrzeugantriebe. Das Verfahren und die Vorrichtung sind jedoch auch zur Herstellung von Elektrodenstapeln für andere Einsatzzwecke geeignet.

Zur Herstellung eines Batteriemoduls ist es bekannt, eine Zelle zu einer Rolle zu wickeln, welche in einem üblicherweise kreiszylindrischen Gehäuse angeordnet wird. Eine derartige Herstellung ist schnell und kostengünstig möglich. Eine Anordnung mehrerer derartiger Batteriemodule ist jedoch nur unter Raumverlust möglich.

Alternativ sind daher Batteriemodule mit anderen Bauformen bekannt. Zur Herstellung von Batteriemodulen mit anderen Bauformen ist es beispielsweise bekannt, Zellen um einen flachen Kern zu wickeln, einen bandförmigen Separator in Z-Form zu falten und einzelne Elektroden, auch als Elektrodenblätter bezeichnet, seitlich in die sich bildenden Taschen einzuschieben oder Elektrodenstapel aus einzelnen Elektroden und Separatoren zu bilden. Dabei ist es bekannt, die so geschaffenen Zellwickel, Z-Stapel oder Elektrodenstapel zur Herstellung sogenannter prismatischer Batteriemodule in ein Plastik- oder Metallgehäuse einzubringen. Weiter sind sogenannte Pouch-Zellen, auch als Pouchbag- oder Coffeebag-Zellen bezeichnet, bekannt, wobei der Zellwickel, Z-Stapel oder der Elektrodenstapel in eine dünne, flexible Aluminium-Verbundfolie eingebracht wird. Elektrodenstapel aus einzelnen Elektroden und Separatoren sind hinsichtlich einer Raumausnutzung besonders vorteilhaft.

Zur Herstellung eines Elektrodenstapels ist beispielsweise aus US 2014/0109396 A1 ein Drehtisch bekannt, wobei Elektroden als Elektrodenblätter in typenreinen Stapeln, d.h. getrennt nach Kathode und Anode, an zwei Stapelstationen des Drehtischs bereitgestellt werden. An den Stapelstationen werden jeweils ein Kathodenblatt bzw. ein Anodenblatt und ein Separatorblatt auf einen Träger aufgebracht. Ein Entladen des Drehtischs erfolgt an einer weiteren Station des Drehtischs. Die einzelnen Stapelstationen können dabei mehrfach durchlaufen werden bis eine gewünschte Stapelhöhe erreicht ist. Eine Arbeitsgeschwindigkeit der einzelnen Stapelstationen ist dabei auf den Drehtisch zu synchronisieren.

EP 2 696 421 A1 zeigt eine ähnliche Einrichtung mit einem verschwenkbaren Manipulator mit zwei um 90° versetzten Armen, welcher zwischen zwei Übernahmestationen und einer dazwischen liegenden Ablagestation verschwenkbar ist, um Elektroden-Seperator-Gefüge abwechselnd von den Übernahmestationen zu übernehmen und an der Ablagestation zu stapeln.

EP 2 889 948 A1 zeigt eine Laminiereinrichtung zur Herstellung eines Elektrodenstapels mit einer Plattform, welche zwischen einer Verarbeitungslinie für negative Elektroden und einer Verarbeitungslinie für positive Elektroden hin und her beweggbar ist. Die Vorrichtung umfasst einen quer zur Bewegungsrichtung der Plattform sowie in vertikaler Richtung beweglichen Trägerhalter. Während die Plattform in einer der Verarbeitungslinie stillsteht, werden in dieser Verarbeitungslinie mittels des nach links und rechts sowie auf und ab bewegten Trägerhalters jeweils Elektroden- und Separatorlagen abwechselnd von zugehörigen, links und rechts der Plattform angeordneten Positioniertischen übernommen und auf der Plattform abgelegt.

Alternativ ist es aus US 2013/0111739 A1 bekannt, eine Transportstrecke mit einem Bandförderer vorzusehen, wobei entlang der Transportstrecke mindestens fünf Stapelstationen, nämlich drei Separator-Stapelstation sowie mindestens eine zwischen zwei Separator-Stapelstation angeordnete Kathoden-Stapelstation und mindestens eine zwischen zwei Separator-Stapelstation angeordnete Anoden-Stapelstation vorgesehen sind. An den Stapelstationen werden ein Separator-Material, ein Kathoden-Material und ein Anoden-Material jeweils als Folienbahn auf einer Rolle bereitgestellt. Mittels des Bandförderers werden Trägerelemente entlang der Transportstrecke zu den Stapelstationen gefördert, wobei an den Stapelstationen jeweils ein Stück von der entsprechenden Folie abgetrennt, mit einer Klebeschicht versehen und auf dem Trägerelement bzw. dem auf dem Trägerelement bereits vorhandenen Stapel abgelegt wird.

### AUFGABE UND LÖSUNG

Es ist eine Aufgabe der Erfindung, ein Verfahren und eine Vorrichtung zur Herstellung mehrerer Elektrodenstapel, beispielsweise für ein Batteriemodul zu schaffen, welches/welche eine schnelle Herstellung mit einer hohen Präzision ermöglicht. Diese Aufgabe wird gelöst durch das Verfahren gemäß Anspruch 1 und die Vorrichtung gemäß Anspruch 7. Vorteilhafte Ausgestaltungen sind in den Unteransprüchen beschrieben.

Gemäß eines ersten Aspekts wird ein Verfahren zur Herstellung mehrerer Elektrodenstapel geschaffen, wobei an mindestens zwei Stapelstationen, vorzugsweise mindestens drei Stapelstationen jeweils mindestens eine Elektrodenlage und/oder mindestens eine Separatorlage von einem bahnförmigen Folienvorrat getrennt und auf einer Ablagefläche gestapelt werden, wobei mehrere individuell bewegbare, jeweils mindestens eine Ablagefläche aufweisende Schlitten bereitgestellt werden, wobei mehrere Elektrodenstapel auf Ablageflächen mehrerer Schlitten parallel hergestellt werden, und wobei die Schlitten zur Übernahme mindestens einer Elektrodenlage und/oder mindestens einer Separatorlage von einer der mindestens zwei Stapelstationen jeweils individuell zu dieser Stapelstation synchronisiert werden.

Durch die Synchronisation der Schlitten zu den Stapelstationen ist eine exakte Positionierung einer Elektroden- und/oder Separatorlage auf der Ablagefläche oder auf bereits auf der Ablagefläche gestapelten Elektroden- und/oder Separatorlagen möglich. Dadurch ist ein Herstellen mehrerer Elektrodenstapel auf mehreren Schlitten parallel möglich. Die Schlitten weisen in vorteilhaften Ausgestaltungen exakt eine Ablagefläche auf. Es sind jedoch auch Ausgestaltungen denkbar, bei welchen der Schlitten mehr als eine Ablagefläche aufweist, auf welchen jeweils eine Elektroden- und/oder eine Separatorlage mittels zwei oder mehr synchron arbeitender Zuführeinrichtungen einer Stapelstation ablegbar sind.

Vorzugsweise sind mindestens drei Stapelstationen vorgesehen, an welchen eine Kathodenlage, eine Anodenlage bzw. eine Separatorlage an die Ablagefläche übergeben werden. Es sind jedoch auch Gestaltungen denkbar, bei welchen an den Stapelstationen bereits vorlaminierte Materialbahnen umfassend einen Elektrodenlage und eine Separatorlage vorgesehen sind, wobei nur zwei Stapelstationen notwendig sind.

In einer vorteilhaften Ausgestaltung werden die Schlitten entlang einer umlaufenden Bahn zu den Stapelstationen bewegt. Dabei sind vorzugsweise vier Stapelstationen, nämlich eine erste und eine zweite Separator-Stapelstation zum Anbringen einer ersten und einer zweiten Separatorlage, eine Kathoden-Stapelstation zum Anbringen einer Kathodenlage und eine Anoden-Stapelstation zum Anbringen einer Anodenlage vorgesehen. Zum Herstellen eines Elektrodenstapels wird beispielsweise zunächst die erste Separator-Stapelstation, anschließend die Kathoden-Stapelstation, die zweite Separator-Stapelstation und die Anoden-Stapelstation angefahren. Sofern ein Elektrodenstapel mit mehr als zwei Elektrodenlagen aufgebaut werden soll, werden die Stapelstationen anschließend erneut angefahren. Dieser Vorgang wird wiederholt bis die gewünschte Anzahl an Lagen erreicht ist. Der so aufgebaute Elektrodenstapel wird ausgeschleust oder auf andere Weise der Bahn entnommen.

Die Anzahl der Schlitten ist für einen optimalen Prozessablauf an eine durchschnittliche Größe der Elektrodenstapel und Anzahl der Stapelstationen und damit an einer Zahl der Umläufe angepasst und ist vorzugsweise ein ganzzahliges Vielfaches der Zahl der Umläufe.

Dabei wird in einer Ausgestaltung vor oder nach einem Ausschleusen an einer weiteren Stapelstation eine letzte Separatorlage angebracht. In anderen Ausgestaltungen durchläuft der Schlitten die umlaufende Bahn bis eine abschließende Separatorlage angebracht wurde und wird dann aus der Bahn ausgeschleust oder auf andere Weise der Bahn entnommen. Um einen individuellen Aufbau von Elektrodenstapeln zu ermöglichen, sind in einer Ausgestaltung an jeder Stapelstation Weichen oder andere Umlenkelemente vorgesehen, sodass bei Bedarf ein Schlitten an einer Stapelstation vorbeigeführt werden kann.

Vorzugsweise ist eine lineare Bahn vorgesehen, wobei die Schlitten für eine Synchronisation in Transportrichtung beschleunigt oder abgebremst werden. In vorteilhaften Ausgestaltungen werden die Ablageflächen für einen Ausgleich eines vertikalen oder horizontalen Versatzes zu einer zu übernehmenden Elektrodenlage oder Separatorlage in vertikaler und/oder horizontaler Richtung relativ zu den Schlitten versetzt. Durch ein Versetzen der Ablagefläche in vertikaler Richtung relativ zu dem Schlitten ist insbesondere eine Anpassung einer Höhe einer Übernahmeebene für eine weitere Lage an eine bereits abgelegte Stapelhöhe möglich. Die Elektrodenlagen weisen beispielsweise eine seitliche Fahne für eine Kontaktierung und Verschaltungen auf. Die Fahnen für die Anodenlage und die Kathodenlage sind beispielsweise an gegenüberliegenden seitlichen Rändern der ausgeschnittenen Folienstücke vorgesehen, sodass - wenn die Stapelstation bezüglich der Bahn gleich ausgerichtet sind - die seitlichen Ränder der Folienstücke der Anodenlage und der Kathodenlage aufgrund eines Schneidvorgangs in seitlicher Richtung versetzt sind. Durch Versetzen der Ablagefläche in horizontaler Richtung quer zu einer Transportrichtung ist dabei ein Ausrichten der seitlichen Ränder der Anodenlagen und der Kathodenlagen möglich. Alternativ ist in einer Ausgestaltung vorgesehen, dass die Stapelstation bezüglich der Bahn versetzt angeordnet sind, sodass die seitlichen Ränder der Folienstücke der Anodenlage und der Kathodenlage zueinander ausgerichtet sind.

Für eine Sicherung der einzelnen Lagen oder eines bereits abgelegten Stapels auf einem Schlitten ist in einer Ausgestaltung eine Saugeinrichtung vorgesehen. In anderen Ausgestaltungen werden die Lagen auf dem Schlitten beim Stapeln stoffschlüssig mit den darunter liegenden Lagen verbunden. Vorzugsweise werden die Elektrodenlagen und/oder Separatorlagen an den Schlitten jeweils mittels einer Klemmvorrichtung geklemmt. Die Klemmvorrichtung erlaubt es, auch bei größeren Höhen den Stapel sicher auf Position zu halten.

Für eine Betätigung der Klemmvorrichtung ist in vorteilhaften Ausgestaltungen eine externe Betätigungseinrichtung vorgesehen. Als externe Betätigungseinrichtung wird dabei eine Betätigungseinrichtung bezeichnet, welche nicht auf dem Schlitten angeordnet ist. Die Betätigungseinrichtung umfasst in vorteilhaften Ausgestaltungen mehrere, den Stapelstationen zugeordnete Betätigungseinheiten. Mittels der Betätigungseinrichtung ist vorzugsweise ein Öffnen der Klemmvorrichtungen zum Ablegen einer Lage möglich, wobei die Klemmvorrichtungen mittels passiver Elemente, wie beispielsweise Federelemente, in einer Schließstellung gehalten werden. Ein Öffnen der Klemmvorrichtung mittels der Betätigungseinrichtung erfolgt je nach Ausgestaltung mechanisch, elektronisch und/oder magnetisch. In vorteilhaften Ausgestaltungen ist eine berührungslos wirkende Betätigungseinrichtung vorgesehen.

An den Stapelstationen werden Folienstücke für die Elektrodenlage und/oder Separatorlagen jeweils von einem bahnförmigen Folienvorrat getrennt und der Ablagefläche übergeben. Die Stapelstationen weisen zu diesem Zweck geeignete Schneid- und Übergabeeinheiten auf. Der bahnförmige Folienvorrat wird beispielsweise als Rolle bereitgestellt, wobei ein Ende einer Rolle mit einer nachfolgenden Rolle verbunden wird. Um zu verhindern, dass die Verbindungsstücke oder andere Schlechtteile der Folienstücke in den Elektrodenstapel gelangen, erfolgt vorzugsweise an den Stapelstationen vor einer Übergabe einer Elektrodenlage und/oder einer Separatorlage an den Schlitten eine Qualitätskontrolle, wobei Schlechtteile ausgeschnittener Folienstücke nicht abgelegt, sondern ausgeschleust werden. Der Schlitten verbleibt dabei in einer Ausgestaltung an seiner Position, sodass ein nachfolgendes Folienstück an den Schlitten übergeben werden kann. Alternativ wird der Schlitten markiert und wird entlang der Bahn weiter bewegt, wobei durch eine Markierung sichergestellt ist, dass an einer oder mehreren nachfolgenden Stapelstationen keine Elektroden- und/oder Separatorlage an den Schlitten übergeben wird, sodass eine gewünschte Reihenfolge der Elektroden- und/oder Separatorlagen eingehalten wird. Alternativ oder zusätzlich zu einer Qualitätskontrolle vor einer Übergabe einer Elektrodenlage und/oder einer Separatorlage an den Schlitten, erfolgt in anderen Ausgestaltungen eine Qualitätskontrolle nach einer Übergabe einer Elektrodenlage und/oder einer Separatorlage an den Schlitten, wobei fehlerhafte Elektrodenstapel markiert werden. Durch die Markierung kann verhindert werden, dass an nachfolgenden Stapelstationen weitere Lagen abgelegt werden. Der fehlerhafte Elektrodenstapel kann an einer geeigneten Stelle zu einem frühen Zeitpunkt aus dem Herstellungsprozess ausgeschleust werden. Eine Markierung erfolgt vorzugsweise elektronisch mittels einem dem Schlitten zugeordneten Tag. Es sind jedoch auch andere Markierungen denkbar. Je nach Material der Elektrodenlage und/oder Separatorlagen und/oder eines Schneidprinzips erfolgt an den Stapelstationen alternativ oder zusätzlich weiter ein Reinigen der von dem Folienvorrat abgetrennten Teile.

Gemäß einem zweiten Aspekt wird eine Vorrichtung zur Herstellung mehrerer Elektrodenstapel für ein Batteriemodul mit einem Transportsystem umfassend mindestens eine Ablagefläche und mit mindestens zwei Stapelstationen, geschaffen, wobei die mindestens zwei Stapelstationen jeweils eine Schneid- und Übergabeeinheit aufweisen, die gestaltet ist, um mindestens eine Elektrodenlage und/oder mindestens eine Separatorlage von einem bahnförmigen Folienvorrat zu trennen und auf der Ablagefläche abzulegen, wobei das Transportsystem mehrere individuell bewegbare, jeweils mindestens eine Ablagefläche aufweisende Schlitten umfasst, und wobei eine Steuereinrichtung zum Steuern einer individuellen Bewegung der Schlitten zum parallelen Herstellen mehrerer Elektrodenstapel auf Ablageflächen mehrerer Schlitten vorgesehen ist, wobei mittels der Steuereinrichtung die Schlitten zur Übernahme mindestens einer Elektrodenlage und/oder mindestens einer Separatorlage von einer der mindestens zwei Stapelstationen jeweils individuell zu dieser Stapelstation synchronisierbar sind.

Die Schlitten weisen in vorteilhaften Ausgestaltungen exakt eine Ablagefläche auf, wobei die Stapelstationen jeweils exakt eine Zuführeinrichtung aufweist, mittels welcher ein Folienstück für eine Elektroden- und/oder eine Separatorlage. an die Ablagefläche übergebbar ist. Es sind jedoch auch Ausgestaltungen denkbar, bei welchen der Schlitten mehr als eine Ablagefläche aufweist, auf welchen jeweils ein Folienstück für eine Elektroden- und/oder Separatorlage mittels zwei oder mehr synchron arbeitender Zuführeinrichtungen einer Stapelstation ablegbar sind.

In einer Ausgestaltung sind den Schlitten jeweils eigene Antriebe zugeordnet, mittels welchen die Schlitten auf einer Transportfläche oder entlang einer Transportstrecke verfahrbar sind. Vorzugsweise sind an den Schlitten Permanentmagneten vorgesehen, wobei eine Transportfläche oder eine lineare Transportstrecke mit einzeln schaltbaren Magnetspulen ausgestattet ist. Für eine Bewegung der Schlitten werden die Magnetspulen angesteuert, um sich verändernde Magnetfelder zu erzeugen, welche eine individuelle Bewegung der Schlitten bewirken. Dadurch ist es möglich, kostengünstige Schlitten zu schaffen.

In einer Ausgestaltung ist eine Transportfläche vorgesehen, auf welcher die Schlitten frei bewegbar sind. Für eine einfache Ansteuerung umfasst das Transportsystem eine eindimensionale umlaufende Bahn, wobei die Stapelstationen entlang der Bahn angeordnet sind. Als eindimensionale Bahn wird dabei eine Bahn bezeichnet, bei welcher die Schlitten nur in eine Transportrichtung beweglich sind. Die Transportrichtung kann dabei sowohl gerade als auch gekrümmte Abschnitte aufweisen. Für eine einfache Positionierung und Bahnführung sind die Stapelstationen in vorteilhaften Ausgestaltungen entlang eines geraden Abschnitts der Bahn angeordnet und zueinander ausgerichtet.

Vorzugsweise sind die Ablageflächen jeweils relativ zu dem Schlitten in vertikaler und/oder horizontaler Richtung versetzbar gelagert. Für ein Versetzen der Ablageflächen relativ zu einem zugehörigen Schlitten sind beispielsweise entlang der Bahn Schikanen vorgesehen. Ein Versetzen der Ablageflächen in vertikaler Richtung erfolgt beispielsweise derart, dass an einer Übergabestelle einer Stapelstation eine Oberfläche eines Stapels unabhängig von einer Stapelhöhe relativ zu der Stapelstation auf einer festgelegten Höhe präsentiert wird. Durch einen Versatz in horizontaler Richtung quer zur Transportrichtung ist es möglich, einen seitlichen Versatz einzelner von einer Folienbahn abgetrennter Teile an der Schneid- und Übergabeeinheit auszugleichen. Ein seitlicher Versatz der Folienstücke unterschiedlicher Stapelstationen ist beispielsweise fertigungsbedingt vorhanden, sofern die Folienstücke seitliche Fahnen aufweisen sollen.

Für ein sicheres Halten der Stapel bzw. einzelner Lagen auf der Ablagefläche weisen die Schlitten in vorteilhaften Ausgestaltungen jeweils eine Klemmvorrichtung zum Klemmen von Folienstücken und/oder Stapeln an Folienstücken auf. Die Klemmvorrichtung ist in einer Ausgestaltung mehrteilig umfassend mehrere individuell ansteuerbare Klemmelemente gestaltet. Dadurch ist ein Ablegen einer weiteren Lage auf einem Stapel durch zeitlich versetztes Lösen der Klemmelemente möglich, wobei gleichzeitig der Stapel jeweils durch die verbleibenden Klemmelemente sicher gehalten bleibt.

An den Stapelstationen ist in vorteilhaften Ausgestaltungen eine Betätigungseinrichtung vorgesehen, wobei die Klemmvorrichtung mittels der Betätigungseinrichtung betätigbar ist. Vorzugsweise ist dabei an jeder Stapelstation eine dieser Stapelstation zugeordnete Betätigungseinrichtung vorgesehen, es sind jedoch auch Gestaltungen denkbar, bei welchen die Betätigungseinrichtungen mehrere Stapelstationen zumindest teilweise gemeinsam gestaltet sind. Die Betätigungseinrichtung ist vorzugsweise derart gestaltet, dass mittels der Betätigungseinrichtung ein Öffnen der Klemmvorrichtungen zum Ablegen eines Folienstücks für eine Elektroden- und/oder eine Separatorlage möglich ist, wobei die Klemmvorrichtungen mittels passiver Elemente, wie beispielsweise Federelemente, in einer Schließstellung gehalten werden. Die Betätigungseinrichtung ist durch den Fachmann geeignet gestaltbar, wobei je nach Ausgestaltung eine mechanisch, elektronisch und/oder magnetisch wirkende Betätigungseinrichtung vorgesehen ist. In vorteilhaften Ausgestaltungen ist eine berührungslos wirkende Betätigungseinrichtung vorgesehen.

An den Schneid- und Übergabeeinheiten ist in vorteilhaften Ausgestaltungen jeweils eine Kontrolleinrichtung für eine Qualitätskontrolle vor und/oder nach einer Übergabe einer Elektrodenlage und/oder einer Separatorlage an den Schlitten vorgesehen. Die vor einer Übergabe einer Elektrodenlage und/oder einer Separatorlage an den Schlitten vorgesehene Kontrolleinrichtung umfasst vorzugsweise einen Schlechtauslauf, über welchen Schlechtteile entfernbar sind. Ein Schlechtauslauf erfolgt beispielsweise mittels einer Walze, insbesondere einer Vakuumwalze, eines Fingers und/oder eines Transportbands, an welche ein als ungeeignet für die Herstellung eines Elektrodenstapels identifiziertes Folienstück oder Teil übergeben wird. Es sind jedoch auch andere Gestaltungen denkbar. Die Kontrolleinrichtung umfasst beispielsweise eine Kamera für eine optische Überwachung. Die Kontrolleinrichtung dient dabei in einer Ausgestaltung auch der Überwachung eines etwaigen Versatzes.

Die Schneid- und Übergabeeinheiten sind geeignet gestaltet, um einzelne Teile oder Folienstücke von einem bahnförmigen Folienvorrat zu trennen und an die Schlitten zu übergeben. Zu diesem Zweck umfassen die Schneid- und Übergabeeinheiten in vorteilhaften Ausgestaltungen jeweils mindestens eine Schneidwalze, eine Ambosswalze und eine Übergabewalze. Die Walzen sind vorzugsweise jeweils als Vakuumwalzen gestaltet, wobei ein abgetrenntes Folienstück oder Teil an der Walze mittels Unterdruck oder Saugkraft gehalten wird. Ein Schneiden an der Schneidwalze erfolgt beispielsweise mittels Laser und/oder mechanisch mittels Schneidkanten. Die Walzen sind vorzugsweise derart aufeinander abgestimmt, dass an der Übergabewalze ein Stichversatz erfolgt.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen schematisch:
Fig. 1 einem Elektrodenstapel für ein Batteriemodul
Fig. 2 ein Layout eines ersten Ausführungsbeispiels einer Vorrichtung zur Herstellung mehrerer Elektrodenstapel gemäß Fig. 1 mit einem Transportsystem und vier Stapelstationen,
Fig. 3 eine Schneid- und Übergabestation einer Stapelstation für die Vorrichtung gemäß Fig. 2;
Fig. 4 eine alternatives Ausführungsbeispiel einer Schneid- und Übergabestation einer Stapelstation für die Vorrichtung gemäß Fig. 2 und
Fig. 5 ein Layout eines zweiten Ausführungsbeispiels einer Vorrichtung zur Herstellung mehrerer Elektrodenstapel gemäß Fig. 1 mit einem Transportsystem und acht Stapelstationen.

### DETAILLIERTE BESCHREIBUNG DER AUSFÜHRUNGSBEISPIELE

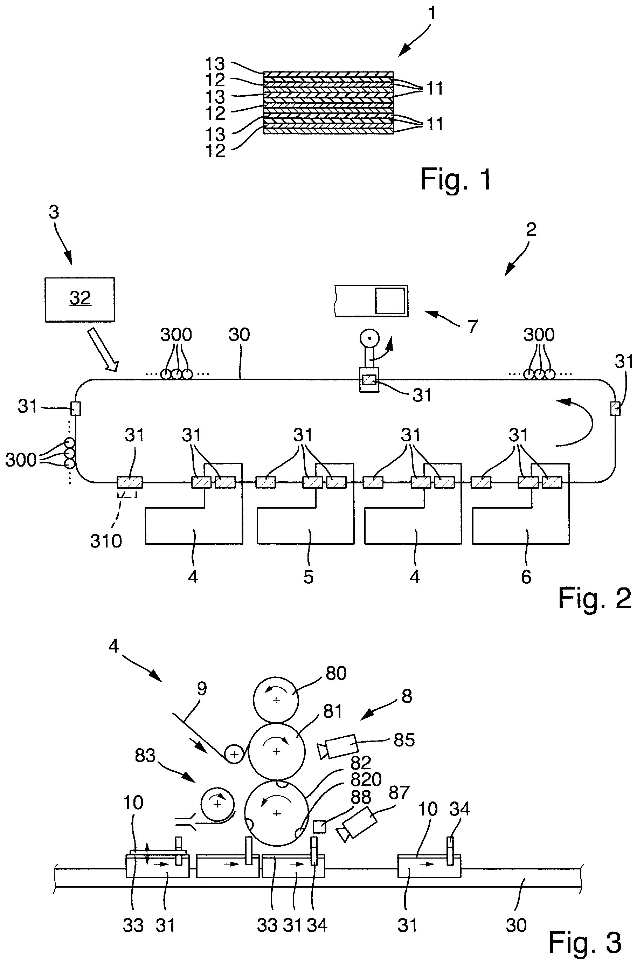

Fig. 1 zeigt schematisch einen Elektrodenstapel 1 für ein Batteriemodul mit zwölf Lagen umfassend sechs Separatorlagen 11 zwischen welchen abwechselnd eine Kathodenlage 12 und eine Anodenlage 13 angeordnet sind. Die Kathodenlage 12 und die Anodenlage 13 werden auch zusammen als Elektrodenlagen bezeichnet. Der Aufbau des Elektrodenstapels 1 ist lediglich beispielhaft. Je nach Anwendung umfasst der Elektrodenstapel mehr oder weniger als zwölf Lagen. Insbesondere für eine Verwendung in einem Batteriemodul für einen Kraftfahrzeugantrieb umfasst der Elektrodenstapel üblicherweise mehr als 100 Lagen. Auch der Aufbau ist lediglich beispielhaft. In anderen Ausgestaltungen ist die erste von unten an eine Separatorlage 11 anschließende Elektrodenlage eine Anodenlage 13. In wieder anderen Ausgestaltungen ist alternativ oder zusätzlich die unterste Lage eine Elektrodenlage und/oder die oberste Lage des Stapels eine Separatorlage.

Fig. 2 zeigt schematisch eine Vorrichtung 2 zur Herstellung mehrerer Elektrodenstapel gemäß Fig. 1. Die dargestellte Vorrichtung 2 umfasst ein Transportsystem 3, vier Stapelstationen 4, 5, 6 und eine Übergabestation 7. An den Stapelstationen 4, 5, 6 ist jeweils eine Elektrodenlage 12, 13 oder eine Separatorlage 11 auf einer Ablagefläche 33 (vgl. Fig. 3) oder einem bereits vorhandenen Stapel 10 (vgl. Fig. 3) ablegbar. In dem dargestellten Ausführungsbeispiel wird beispielsweise an den Stapelstationen 4 jeweils eine Separatorlage 11, an der Stapelstation 5 eine Kathodenlage 12 und an der Stapelstation 6 eine Anodenlage 13 abgelegt. Es sind jedoch auch andere Ausgestaltungen denkbar.

Das Transportsystem 3 umfasst eine umlaufende eindimensionale Bahn 30, beispielsweise eine Schiene, mehrere entlang der Bahn 30 individuell bewegbare Schlitten 31 und eine Steuereinrichtung 32 zum Steuern einer individuellen Bewegung der Schlitten 31 entlang der Bahn 30. An den Schlitten 31 ist jeweils mindestens eine Ablagefläche 33 (vgl. Fig. 3) vorgesehen, auf welchen die Elektroden- und Separatorlagen gestapelt werden.

Für eine individuelle Bewegung der Schlitten 31 sind in dem dargestellten Ausführungsbeispiel schematisch dargestellte, einzeln schaltbaren Magnetspulen 300 entlang der Bahn 30 vorgesehen. An den Schlitten 31 sind schematisch für einen Schlitten durch eine gestrichelte Linie angedeutete Permanentmagneten 310 vorgesehen. Für eine Bewegung der Schlitten 31 werden die Magnetspulen 300 geeignet angesteuert, um entlang der Bahn 30 wandernde Magnetfelder zu erzeugen.

Eine Ansteuerung erfolgt dabei derart, dass die Schlitten 31 jeweils individuell zu den Stapelstationen 4, 5, 6 synchronisiert werden. Dies erlaubt eine präzise Stapelung der Elektroden- und Separatorlagen auf der Ablagefläche der Schlitten 31.

Die Schlitten 31 können wiederholt die Stapelstationen 4, 5, 6 durchlaufen, bis eine gewünschte Stapelhöhe erreicht ist. Sobald eine gewünschte Stapelhöhe erreicht ist, wird der Elektrodenstapel an der Übergabestation 7 an ein nachfolgendes Verarbeitungssystem übergeben.

Fig. 3 zeigt schematisch einen Ausschnitt eines Ausführungsbeispiels einer Stapelstation 4 für die Vorrichtung 2 gemäß Fig. 2. Die Stapelstationen 5 und 6 können baugleich gestaltet werden. Die Stapelstationen 4, 5, 6 umfassen jeweils eine Schneid- und Übergabeeinheit 8. In dem dargestellten Ausführungsbeispiel umfasst die Schneid- und Übergabeeinheit 8 eine Schneidwalze 80, eine Ambosswalze 81, eine Übergabewalze 82 und einen Schlechtauslauf 83.

Das Material für die mittels der Stapelstation 4 abzulegenden Elektroden- oder Separatorlage wird als bahnförmiger Folienvorrat 9 bereitgestellt. Ein für den Elektrodenstapel gewünschtes Folienstück wird aus dem bahnförmigen Folienvorrat 9 mittels der Schneidwalze 80 und der Ambosswalze 81 ausgeschnitten und mittels der Übergabewalze 82 an eine Ablagefläche 33 eines Schlittens 31 übergeben. Mittels der Steuereinrichtung 32 (vgl. Fig. 2) wird der Schlitten 31 geeignet angesteuert, sodass eine exakte Positionierung in Richtung der durch die Bahn 30 definierten Transportstrecke möglich ist.

An der Stapelstation 4 sind zwei jeweils als Kamera gestaltete Kontrolleinrichtung 85, 87 vorgesehen. Die erste Kontrolleinrichtung 85 ist in dem dargestellten Ausführungsbeispiel vor einer Übergabe eines Folienstücks an den Schlitten 31 vorgesehen. Um zu vermeiden, dass mittels der ersten Kontrolleinrichtung 85 identifizierte Schlechtteile, beispielsweise Spleißstücke, auf einem Stapel 10 abgelegt werden, ist in dem dargestellten Ausführungsbeispiel ein Schlechtauslauf 83 vorgesehen. Der dargestellte Schlechtauslauf 83 umfasst eine Vakuumwalze. Es sind jedoch auch andere Gestaltungen denkbar.

Die zweite Kontrolleinrichtung 87 dient einer Qualitätskontrolle nach einer Übergabe eines Folienstücks an den Schlitten 31. Dabei ist in einer Ausgestaltung vorgesehen, dass fehlerhafte Elektrodenstapel markiert werden, sodass ein weiteres Verarbeiten dieser Elektrodenstapel verhindert wird.

An den Schlitten 31 sind jeweils Klemmvorrichtungen 34 vorgesehen, mittels welcher ein abgetrenntes und übergebenes Folienstück oder ein bereits vorhandener Stapel 10 sicher auf dem Schlitten 31 gehalten werden. In dem dargestellten Ausführungsbeispiel weist die Übergabewalze 82 Aussparungen 820 auf, um eine Kollision mit den Klemmvorrichtungen 34 zu vermeiden. Für eine Betätigung der Klemmvorrichtungen 34 ist an der Stapelstationen 4 eine Betätigungseinrichtung 88 vorgesehen. Die Klemmvorrichtung 34 ist mittels der Betätigungseinrichtung 88 vorzugsweise berührungslos zum Öffnen der Klemmvorrichtung betätigbar, wobei ein weiteres Folienstück bei geöffneter Klemmvorrichtung 34 abgelegt werden kann.

Die Schlitten 31 werden vorzugsweise auf einer Bahn 30 mit einer konstanten Höhe entlang der Transportstrecke bewegt. Um trotz zunehmender Stapelhöhe eines bereits abgelegten Stapels 10 eine exakte Positionierung eines weiteren Folienstücks auf dem Stapel 10 zu ermöglichen, ist in dem dargestellten Ausführungsbeispiel die Ablagefläche 33 in vertikaler Richtung gegenüber dem Grundkörper des Schlittens 31 beweglich gelagert, wie schematisch in Fig. 3 an dem linken Schlitten 31 durch einen Doppelpfeil angedeutet. Eine Verschiebung der Ablagefläche 33 wird beispielsweise mittels einer nicht dargestellten Schikane bewirkt.

Zusätzlich sind die Ablageflächen 33 in vorteilhaften Ausgestaltungen jeweils relativ zu dem Schlitten 31 in vertikaler Richtung quer zur Transportrichtung versetzbar gelagert, um eine Anpassung der Ablagefläche 33 an einen seitlichen Versatz ausgeschnittener Folienstücke verschiedener Stapelstationen 4, 5, 6 zu ermöglichen. Ein seitlicher Versatz ist dabei beispielsweise mittels der Kontrolleinrichtung 85 erfassbar.

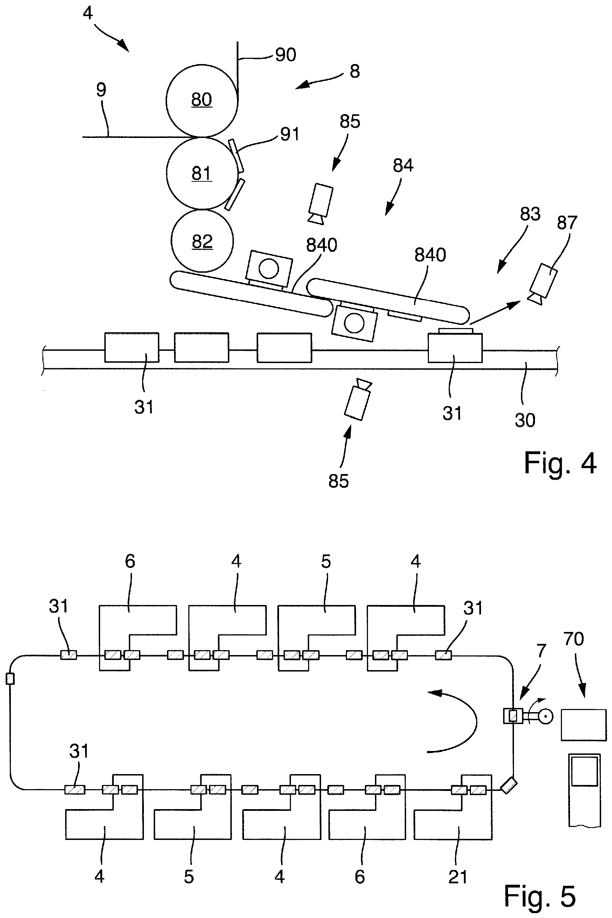

Fig. 4 zeigt schematisch eine alternative Ausgestaltung einer Schneid- und Übergabeeinheit 8 für eine Stapelstation 4, 5, 6 gemäß Fig. 2. Umfassend eine Schneidwalze 80, eine Ambosswalze 81, eine Übergabewalze 82 und einen Schlechtauslauf 83. Die Schneid- und Übergabeeinheit 8 gemäß Fig. 4 ist ähnlich der Schneid- und Übergabeeinheit 8 gemäß Fig. 3 und für gleiche oder ähnliche Bauteile werden einheitliche Bezugszeichen verwendet. Auf eine erneute detaillierte Beschreibung bereits beschriebener Bauteile wird verzichtet und auf oben verwiesen. Im Unterschied zu dem oben dargestellten Ausführungsbeispiel ist gemäß Fig. 4 zusätzlich eine Reinigungseinrichtung 84 zwischen der Übergabewalze 82 und einer Übergabestelle an einen Schlitten 31 vorgesehen. Die dargestellte Reinigungseinrichtung 84 umfasst zwei Transportbänder, wobei aus dem Folienvorrat 9 ausgeschnittene Folienstücke 91 mit einander gegenüberliegenden Oberflächen auf den Transportbändern 840 zu liegen kommen. Den Transportbändern 840 ist jeweils eine als Kamera gestaltete Kontrolleinrichtung 85 für eine Qualitätskontrolle vor einer Übergabe an den Schlitten 31 zugeordnet.

Bei dem Ausführungsbeispiel gemäß Fig. 4 ist zudem ebenfalls eine zweite Kontrolleinrichtung 87 vorgesehen, welcher einer Qualitätskontrolle nach einer Übergabe eines Folienstücks an den Schlitten 31 dient.

Die Folienstücke 91 werden mittels der Schneidwalze 80 und der Ambosswalze 81 aus dem bahnförmigen Folienvorrat 9 ausgeschnitten. Ein Leergitter 90 wird beispielsweise eine Wiederaufbereitung zugeführt. Die Folienstücke 91 werden an der Übergabewalze 82 auf Stich versetzt und an ein erstes Transportband 840 der Reinigungseinrichtung übergeben. Dort erfolgt eine Reinigung um Schneidreste oder andere Verunreinigungen von der ersten Oberfläche zu entfernen. Anschließend werden die Folienstücke an das zweite Transportband 840 der Reinigungseinrichtung 84 für eine Reinigung der gegenüberliegenden Oberseite übergeben. Der Reinigungsprozess und die Folienstücke 91 werden mittels der Kontrolleinrichtungen 85 überwacht, sodass Schlechtteile über einen Schlechtauslauf 83 abtransportiert werden. Die für gut erachteten Teile werden an den Schlitten 31 übergeben.

Fig. 5 zeigt ein Layout eines zweiten Ausführungsbeispiels einer Vorrichtung 2 zur Herstellung mehrerer Elektrodenstapel 11 gemäß Fig. 1. Die Vorrichtung 2 gemäß Fig. 5 ist ähnlich der Vorrichtung 2 gemäß Fig. 2 und für gleiche oder ähnliche Bauteile werden einheitliche Bezugszeichen verwendet. Auf eine erneute detaillierte Beschreibung bereits beschriebener Bauteile wird verzichtet und auf oben verwiesen.

Im Unterschied zu der Vorrichtung gemäß Fig. 2 umfasst die Vorrichtung 2 gemäß Fig. 5 acht Stapelstationen 4, 5, 6, welche entlang der Bahn 30 angeordnet sind. Es ist offensichtlich für den Fachmann, dass die dargestellte Zahl der Stapelstationen 4, 5, 6 lediglich beispielhaft ist. An der Vorrichtung 2 gemäß Fig. 5 sind weiter eine Übergabestation 7, eine Banderolier-Station 70 und eine Reservestation 21 vorgesehen. Die Reservestation 21 dient beispielsweise dem Anbringen einer weiteren Separatorlage 11 an einem Elektrodenstapel vor einer Übergabe des Elektrodenstapels an ein nachfolgendes System mittels der Übergabestation 7. In alternativen Ausgestaltungen ist stromabwärts der Übergabestation 7 eine zusätzliche Separator-Stapelstation zum Anbringen einer letzten Separatorlage vorgesehen. Die Anordnung dieser Stationen ist ebenfalls lediglich beispielhaft. Beispielsweise ist es alternativ denkbar, auf die Banderolierstation 70 zu verzichten oder eine Banderolierstation räumlich getrennt von der Übergabestation 7 vorzusehen. Alternativ oder zusätzlich sind weitere Stationen denkbar und/oder wird in anderen Ausgestaltungen auf einzelne dieser Stationen verzichtet.

## Patentansprüche

1. Verfahren zur Herstellung mehrerer Elektrodenstapel (1), wobei an mindestens zwei Stapelstationen (4, 5, 6), vorzugsweise mindestens drei Stapelstationen (4, 5, 6) jeweils mindestens eine Elektrodenlage (12, 13) und/oder mindestens eine Separatorlage (11) von einem bahnförmigen Folienvorrat getrennt und auf einer Ablagefläche (33) gestapelt werden,
**dadurch gekennzeichnet, dass** mehrere individuell bewegbare, jeweils mindestens eine Ablagefläche (33) aufweisende Schlitten (31) bereitgestellt werden, wobei mehrere Elektrodenstapel (1) auf Ablageflächen (33) mehrerer Schlitten (31) parallel hergestellt werden, wobei die Schlitten (31) zur Übernahme mindestens einer Elektrodenlage (12, 13) und/oder mindestens einer Separatorlage (11) von einer der mindestens zwei Stapelstationen (4, 5, 6) jeweils individuell zu dieser Stapelstation (4, 5, 6) synchronisiert werden.

2. Verfahren nach Anspruch 1, **dadurch gekennzeichnet, dass** die Schlitten (31) entlang einer umlaufenden Bahn (30) zu den Stapelstationen (4, 5, 6) bewegt werden.

3. Verfahren nach Anspruch 1 oder 2, **dadurch gekennzeichnet, dass** die Ablageflächen (33) für einen Ausgleich eines vertikalen oder horizontalen Versatzes zu einer zu übernehmenden Elektrodenlage (12, 13) und/oder Separatorlage (11) in vertikaler und/oder horizontaler Richtung relativ zu den Schlitten (31) versetzt werden.

4. Verfahren nach einem der Ansprüche 1, 2 oder 3, **dadurch gekennzeichnet, dass** die Elektrodenlagen und/oder Separatorlagen an den Schlitten jeweils mittels einer Klemmvorrichtung (34) geklemmt werden.

5. Verfahren nach Anspruch 4, **dadurch gekennzeichnet, dass** die Klemmvorrichtung (34) mittels einer externen Betätigungseinrichtung (88) betätigt wird.

6. Verfahren nach einem der Ansprüche 1 bis 5, **dadurch gekennzeichnet, dass** an den Stapelstationen (4, 5, 6) vor und/oder nach einer Übergabe einer Elektrodenlage (12, 13) und/oder einer Separatorlage (11) an den Schlitten (31) eine Qualitätskontrolle erfolgt, wobei Schlechtteile nicht übergeben, sondern ausgeschleust werden und/oder fehlerhafte Elektrodenstapel (1) markiert werden, und/oder ein Reinigen von den von dem bahnförmigen Folienvorrat abgetrennten Folienstücken erfolgt.

7. Vorrichtung zur Herstellung mehrerer Elektrodenstapel (1) mit einem Transportsystem (3) umfassend mindestens eine Ablagefläche (33) und mit mindestens zwei Stapelstationen (4, 5, 6), die jeweils eine Schneid- und Übergabeeinheit (8) aufweisen, die gestaltet ist, um mindestens eine Elektrodenlage (12, 13) und/oder mindestens eine Separatorlage (11) von einem bahnförmigen Folienvorrat (9) zu trennen und auf der Ablagefläche (33) abzulegen,
**dadurch gekennzeichnet, dass** das Transportsystem (3) mehrere individuell bewegbare, jeweils mindestens eine Ablagefläche (33) aufweisende Schlitten (31) umfasst und dass eine Steuereinrichtung (32) zum Steuern einer individuellen Bewegung der Schlitten (31) zum parallelen Herstellen mehrerer Elektrodenstapel (1) auf Ablageflächen (33) mehrerer Schlitten (31) vorgesehen ist, wobei mittels der Steuereinrichtung (32) die Schlitten (31) zur Übernahme mindestens einer Elektrodenlage (12, 13) und/oder mindestens einer Separatorlage (11) von einer der mindestens zwei Stapelstationen (4, 5, 6) jeweils individuell zu dieser Stapelstation (4, 5, 6) synchronisierbar sind.

8. Vorrichtung nach Anspruch 7, **dadurch gekennzeichnet, dass** das Transportsystem (3) eine eindimensionale umlaufende Bahn (30) aufweist, wobei die Stapelstationen (4, 5, 6) entlang der Bahn (30) angeordnet sind.

9. Vorrichtung nach Anspruch 7 oder 8, **dadurch gekennzeichnet, dass** die Ablageflächen (33) jeweils relativ zu dem Schlitten (31) in vertikaler und/oder horizontaler Richtung versetzbar gelagert sind.

10. Vorrichtung nach Anspruch 7, 8 oder 9, **dadurch gekennzeichnet, dass** die Schlitten (31) jeweils eine Klemmvorrichtung (34) zum Klemmen von Folienstücken (91) und/oder Stapeln (10) an Folienstücken (91) aufweisen.

11. Vorrichtung nach Anspruch 10, **dadurch gekennzeichnet, dass** an den Stapelstationen (4, 5, 6) eine Betätigungseinrichtung (88) vorgesehen ist, wobei die Klemmvorrichtung (34) mittels der Betätigungseinrichtung (88) betätigbar ist.

12. Vorrichtung nach einem der Ansprüche 7 bis 11, **dadurch gekennzeichnet, dass** an den Schneid- und Übergabeeinheiten (8) jeweils mindestens eine Kontrolleinrichtung (85, 87) für eine Qualitätskontrolle vor und/oder nach einer Übergabe einer Elektrodenlage (12, 13) und/oder einer Separatorlage (11) an den Schlitten (31) vorgesehen ist, wobei die Kontrolleinrichtung (85) vorzugsweise einen Schlechtauslauf (83) umfasst.

13. Vorrichtung nach einem der Ansprüche 7 bis 12, **dadurch gekennzeichnet, dass** die Schneid- und Übergabeeinheiten (8) jeweils mindestens eine Schneidwalze (80), eine Ambosswalze (81) und eine Übergabewalze (82) aufweisen, wobei vorzugsweise zusätzlich mindestens eine Reinigungseinrichtung (84) vorgesehen ist.

## Claims

1. Method for producing a plurality of electrode stacks (1), wherein, at at least two stacking stations (4, 5, 6), preferably at least three stacking stations (4, 5, 6), in each case at least one electrode layer (12, 13) and/or at least one separator layer (11) are/is separated from a web-like film supply and stacked on a set-down surface (33),
**characterized in that** a plurality of individually movable carriages (31) which each have at least one set-down surface (33) are provided, wherein a plurality of electrode stacks (1) are produced on set-down surfaces (33) of a plurality of carriages (31) in parallel, wherein the carriages (31), for the purpose of receiving at least one electrode layer (12, 13) and/or at least one separator layer (11) from one of the at least two stacking stations (4, 5, 6), are each individually synchronized with this stacking station (4, 5, 6).

2. Method according to Claim 1, **characterized in that** the carriages (31) are moved to the stacking stations (4, 5, 6) along a circulating path (30).

3. Method according to Claim 1 or 2, **characterized in that** the set-down surfaces (33), for the purpose of compensating for a vertical or horizontal offset with respect to an electrode layer (12, 13) and/or separator layer (11) to be received, are offset in the vertical and/or horizontal direction relative to the carriages (31) .

4. Method according to one of Claims 1, 2 or 3, **characterized in that** the electrode layers and/or separator layers are clamped to the carriages by means of a clamping apparatus (34) in each case.

5. Method according to Claim 4, **characterized in that** the clamping apparatus (34) is actuated by means of an external actuating device (88).

6. Method according to one of Claims 1 to 5, **characterized in that** quality control is performed at the stacking stations (4, 5, 6) before and/or after transferring an electrode layer (12, 13) and/or a separator layer (11) to the carriage (31), wherein defective parts are not transferred, but rather are discharged and/or faulty electrode stacks (1) are labelled, and/or the pieces of film that have been separated off from the web-like film supply are cleaned.

7. Apparatus for producing a plurality of electrode stacks (1) having a transportation system (3) comprising at least one set-down surface (33) and having at least two stacking stations (4, 5, 6) which each have a cutting and transfer unit (8) which is configured to separate at least one electrode layer (12, 13) and/or at least one separator layer (11) from a web-like film supply (9) and to set it down on the set-down surface (33), **characterized in that** the transportation system (3) comprises a plurality of individually movable carriages (31) which each have at least one set-down surface (33), and **in that** a control device (32) for controlling an individual movement of the carriages (31) for the purpose of producing a plurality of electrode stacks (1) on set-down surfaces (33) of a plurality of carriages (31) in parallel is provided, wherein the carriages (31), for the purpose of receiving at least one electrode layer (12, 13) and/or at least one separator layer (11) from one of the at least two stacking stations (4, 5, 6), can each be individually synchronized with this stacking station (4, 5, 6) by means of the control device (32).

8. Apparatus according to Claim 7, **characterized in that** the transportation system (3) has a one-dimensional circulating path (30), wherein the stacking stations (4, 5, 6) are arranged along the path (30).

9. Apparatus according to Claim 7 or 8, **characterized in that** the set-down surfaces (33) are each mounted such that they can be offset relative to the carriage (31) in the vertical and/or horizontal direction.

10. Apparatus according to Claim 7, 8 or 9, **characterized in that** the carriages (31) each have a clamping apparatus (34) for clamping pieces (91) of film and/or stacking (10) on pieces (91) of film.

11. Apparatus according to Claim 10, **characterized in that** an actuating device (88) is provided on the stacking stations (4, 5, 6), wherein the clamping apparatus (34) can be actuated by means of the actuating device (88).

12. Apparatus according to one of Claims 7 to 11, **characterized in that** in each case at least one control device (85, 87) for quality control before and/or after transferring an electrode layer (12, 13) and/or a separator layer (11) to the carriages (31) is provided at the cutting and transfer units (8), wherein the control device (85) preferably comprises a rejects outlet (83) .

13. Apparatus according to one of Claims 7 to 12, **characterized in that** the cutting and transfer units (8) each have at least one cutting roller (80), one anvil roller (81) and one transfer roller (82), wherein preferably at least one cleaning device (84) is additionally provided.

## Revendications

1. Procédé de réalisation de plusieurs empilements d'électrodes (1), au moins une couche d'électrode (12, 13) et/ou au moins une couche de séparation (11) étant séparées par une alimentation en film en forme de bande et empilées sur une surface de réception (33) au niveau d'au moins deux stations d'empilement (4, 5, 6), de préférence d'au moins trois stations d'empilement (4, 5, 6),
**caractérisé en ce qu'**une pluralité de chariots (31) sont prévus, qui sont mobiles individuellement et qui comportent chacun au moins une surface de réception (33), une pluralité d'électrodes (1) étant réalisées en parallèle sur des surfaces de réception (33) d'une pluralité de chariots (31), les chariots (31) étant synchronisés pour transférer au moins une couche d'électrode (12, 13) et/ou au moins une couche de séparation (11) depuis l'une des au moins deux stations d'empilement (4, 5, 6) à chaque fois individuellement par rapport à cette station d'empilement (4, 5, 6).

2. Procédé selon la revendication 1, **caractérisé en ce que** les chariots (31) sont déplacés le long d'un chemin en circuit fermé (30) jusqu'aux stations d'empilement (4, 5, 6).

3. Procédé selon la revendication 1 ou 2, **caractérisé en ce que** les surfaces de réception (33) sont décalées par rapport aux chariots (31) afin de compenser un décalage vertical ou horizontal, par rapport à une couche d'électrode (12, 13) et/ou une couche de séparation (11) à transférer, dans la direction verticale et/ou horizontale.

4. Procédé selon l'une des revendications 1, 2 ou 3, **caractérisé en ce que** les couches d'électrodes et/ou couches de séparation sont serrées sur le chariot à chaque fois au moyen d'un dispositif de serrage (34).

5. Procédé selon la revendication 4, **caractérisé en ce que** le dispositif de serrage (34) est actionné au moyen d'un organe d'actionnement externe (88).

6. Procédé selon l'une des revendications 1 à 5, **caractérisé en ce qu'**un contrôle qualité est effectué au niveau des stations d'empilement (4, 5, 6) avant et/ou après un transfert d'une couche d'électrode (12, 13) et/ou d'une couche de séparation (11) au chariot (31), les pièces défectueuses étant non pas transférées, mais éjectées et/ou des piles d'électrodes défectueuses (1) étant marquées, et/ou un nettoyage des morceaux de film séparés de l'alimentation en film en forme de bande étant effectué.

7. Dispositif de réalisation d'une pluralité d'empilements d'électrodes (1) qui est pourvu d'un système de transport (3) comprenant au moins une surface de réception (33) et d'au moins deux stations d'empilement (4, 5, 6) qui comportent chacune une unité de découpe et de transfert (8) qui est conçue pour séparer au moins une couche d'électrode (12, 13) et/ou au moins une couche de séparation (11) d'une alimentation en film en forme de bande (9) et la déposer sur la surface de réception (33),
**caractérisé en ce que** le système de transport (3) comprend une pluralité de chariots (31) qui sont mobiles individuellement et qui comportent chacun au moins une surface de réception (33), et **en ce qu'**un organe de commande (32) est prévu pour commander un mouvement individuel des chariots (31) afin de réaliser en parallèle une pluralité d'empilements d'électrodes (1) sur des surfaces de réception (33) d'une pluralité de chariots (31), les chariots (31) pouvant être synchronisés au moyen de l'organe de commande (32) afin de transférer au moins une couche d'électrode (12, 13) et/ou au moins une couche de séparation (11) depuis l'une des au moins deux stations d'empilement (4, 5, 6) à chaque fois individuellement par rapport à cette station d'empilement (4, 5, 6).

8. Dispositif selon la revendication 7, **caractérisé en ce que** le système de transport (3) comporte un chemin en circuit fermé unidimensionnel (30), les stations d'empilage (4, 5, 6) étant disposées le long du chemin (30) .

9. Dispositif selon la revendication 7 ou 8, **caractérisé en ce que** les surfaces de réception (33) sont chacune montées en étant décalées par rapport au chariot (31) dans la direction verticale et/ou horizontale.

10. Dispositif selon la revendication 7, 8 ou 9, **caractérisé en ce que** les chariots (31) comportent chacun un dispositif de serrage (34) destiné au serrage des morceaux de film (91) et/ou à l'empilement (10) sur les morceaux de film (91).

11. Dispositif selon la revendication 10, **caractérisé en ce qu'**un organe d'actionnement (88) est prévu au niveau des stations d'empilement (4, 5, 6), le dispositif de serrage (34) pouvant être actionné au moyen de l'organe d'actionnement (88).

12. Dispositif selon l'une des revendications 7 à 11, **caractérisé en ce qu'**au moins un organe de contrôle (85, 87) destiné au contrôle qualité avant et/ou après un transfert d'une couche d'électrode (12, 13) et/ou d'une couche de séparation (11) est prévu sur les chariots (31) au niveau des unités de découpe et de transfert (8), l'organe de commande (85) comprenant de préférence une sortie d'éjection de rebut (83).

13. Dispositif selon l'une des revendications 7 à 12, **caractérisé en ce que** les unités de découpe et de transfert (8) comportent chacune au moins un rouleau de découpe (80), un rouleau formant enclume (81) et un rouleau de transfert (82), au moins un dispositif de nettoyage (84) étant de préférence prévu en plus.
